(19) Europäisches Patentamt
European Patent Office
Office européen des brevets

(11) Publication number: **0 416 272 B1**

# (12) EUROPEAN PATENT SPECIFICATION

(45) Date of publication of patent specification: **18.08.93 Bulletin 93/33**

(51) Int. Cl.$^5$: **C08G 77/54,** C08G 77/58, C08G 77/22

(21) Application number: **90114426.1**

(22) Date of filing: **27.07.90**

## (54) Formed organosiloxanaminpolycondensates, process for their preparation and their use.

(30) Priority: **31.07.89 DE 3925360**

(43) Date of publication of application: **13.03.91 Bulletin 91/11**

(45) Publication of the grant of the patent: **18.08.93 Bulletin 93/33**

(84) Designated Contracting States: **AT BE CH DE DK ES FR GB IT LI LU NL**

(56) References cited:
**EP-A- 0 367 105**
**DE-A- 2 155 281**
**DE-C- 3 800 563**

(73) Proprietor: **Degussa Aktiengesellschaft**
**Weissfrauenstrasse 9**
**D-60311 Frankfurt (DE)**

(72) Inventor: **Panster, Peter, Dr.**
**Im Lochseif 8**
**D-6458 Rodenbach (DE)**
Inventor: **Wieland, Stefan, Dr.**
**Liebigstrasse 15**
**D-6050 Offenbach a.M. (DE)**

**EP 0 416 272 B1**

Note: Within nine months from the publication of the mention of the grant of the European patent, any person may give notice to the European Patent Office of opposition to the European patent granted. Notice of opposition shall be filed in a written reasoned statement. It shall not be deemed to have been filed until the opposition fee has been paid (Art. 99(1) European patent convention).

## Beschreibung

Gegenstand der Erfindung sind Copolykondensate eines tertiären Organosiloxanamins mit einer oder mehreren Siloxankomponenten, die gegenüber bereits entwickelten Organopolysiloxan-Copolykondensaten (DE-A-38 37 416) die verfahrens- sowie anwendungstechnischen Vorteile einer makroskopischen Kugelform haben. Gleichzeitig werden Verfahren beschrieben, nach denen die neuen Produkte nicht nur in der für die jeweilige Anwendung idealen Kugelgröße, sondern auch mit den geeigneten physikalischen Eigenschaften hergestellt werden können. Weiterhin werden Verfahren zur Verwendung dieser geformten Organosiloxanamin-Copolykondensate beschrieben.

Bereits bekannt sind die in der deutschen Patentschrift 31 20 214 beschriebenen unlöslichen Organosiloxanamine, die sich durch besonders vorteilhafte chemische und physikalische Eigenschaften auszeichnen. Diese Organosiloxanamine können als Ionenaustauscher, Adsorbens, Wirkstoffträger, als Katalysatorträger oder als feste Base in basenkatalysierten Reaktionen eingesetzt werden. Die Matrix dieser Polymeren läßt sich chemisch und physikalisch in idealer Weise modifizieren und damit den Anforderungen der unterschiedlichen Anwendungen anpassen.

Für diese neuen Polymeren wurde ein Formgebungsverfahren entwickelt, das es ermöglicht, diese Produkte in der vorteilhaften Kugelform zu präparieren. Diese geformten Organosiloxanamine werden in der DE-OS 38 00 563 beschrieben.

Nachdem es sich bei verschiedenen Anwendungen der Organosiloxanamine als vorteilhaft erwiesen hat, mehrere unterschiedlich funktionelle Gruppen in einer Polymermatrix miteinander zu kombinieren, wurden entsprechende Organosiloxanamin-Copolykondensate entwickelt und in der DE-OS 38 37 416 beschrieben. Die verschiedenen Varianten der Anordnung der unterschiedlichen Funktionalitäten im Polymerverband, gegebenenfalls in Kombination mit Vernetzern, eröffnen zusätzliche Möglichkeiten. Als ungünstig erwies sich allerdings inzwischen auch für diese Copolykondensate, daß diese Produkte bisher nur in einer relativ undefinierten geometrischen Form und nicht in Kugelform mit den gewünschten physikalischen und morphologischen Eigenschaften hergestellt werden konnten. Die EP-A-0 282 737 betrifft Acylthioharnstoffgruppenhaltige Organopolysiloxane, die aber ebenfalls keine Kugelform besitzen.

Aufgabe der vorliegenden Erfindung ist es Organosiloxanamin-Copolykondensate der in der DE-OS 38 37 416 beschriebenen Art in Kugelform und mit den gewünschten physikalischen Eigenschaften reproduzierbar bereitzustellen. Diese Aufgabe wird erfindungsgemäß gelöst durch die Entwicklung von geformten Organosiloxanamin-Copolykondensaten, wie sie in den Ansprüchen 1 - 3 angegeben sind.

Das Verhältnis der beiden Komponenten nach Formel (I) und Formel (II) ist sehr stark variierbar und kann in den in Anspruch 1 angegebenen Grenzen liegen, ohne daß Probleme mit den morphologischen, physikalischen oder chemischen Eigenschaften der erfindungsgemäßen Produkte oder den erfindungsgemäßen Herstellungsverfahren auftreten. Anspruch 1 betrifft ein bevorzugtes Verhältnis.

Das in der Praxis zu wählende Verhältnis hängt in erster Linie von der vorgesehenen Verwendung des jeweiligen Copolykondensates und den hierfür erforderlichen chemischen und physikalischen Eigenschaften ab, also z. B. davon, ob eine hohe Dichte an funktionellen Gruppen nach Formel (II) gewünscht wird oder nicht.

Die monomeren Bausteine der geformten Organosiloxanamin-Copolykondensate sind prinzipiell bekannte Verbindungen, beispielsweise der Formeln

$$N[(CH_2)_3Si(OC_2H_5)_3]_3$$

$$H_2N-(CH_2)_5Si(OCH_3)_3$$

$$H_2N-(CH_2)_2-NH-(CH_2)_2-NH-(CH_2)_3Si(OCH_3)_3$$

$$(C_6H_5)_2P-(CH_2)_2Si(OCH_3)_3$$

$$\begin{array}{ll} CH_3 & O \\ | & \| \\ H_2C=C- & C-O-(CH_2)_3Si(OCH_3)_3 \end{array}$$

$$Si(OC_2H_5)_4$$

(N,N'-disubstituierte und N,N,N'-/N,N',N' trisubstituierte organyloxysilyl-funktionelle Thioharnstoffe, die zusätzlich eine tertiäre Aminfunktion aufweisen, sind in der parallel eingereichten DE-OS 39 25 356 bezüglich Stoff und Herstellungsmöglichkeiten beschrieben).

Die Zusammensetzung der daraus erhältlichen Polymereinheiten läßt sich durch die Formeln

$$N[(CH_2)_3SiO_{3/2}]_3$$

$$H_2N-(CH_2)_5SiO_{3/2}$$

$$H_2N-(CH_2)_2-NH-(CH_2)_2-NH-(CH_2)_3SiO_{3/2}$$

$(C_6H_5)_2P\text{-}(CH_2)_2SiO_{3/2}$

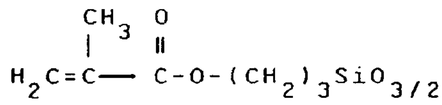

$SiO_{4/2}$ $(SiO_2)$

beschreiben.

Die geformten Copolykondensate können selbst bei gleicher chemischer Zusammensetzung in völlig unterschiedlicher Form als sog. statistisches Copolykondensat ("Random-Copolykondensat") oder als Block-Copolykondensat oder auch als sog. gemischtes Copolykondensat vorliegen (Anspruch 2). Erfindungsgemäß können die geformten Copolykondensate bei Praktizierung erfindungsgemäßer Formungsverfahren in bezug auf die Einheiten nach Formeln (I), (II) und (IV) in jeder der drei genannten Formen vorliegen. Dies bedeutet, daß im Falle eines reinen statistischen Copolykondensates, das Einheiten nach Formel (I) und (II) und gegebenenfalls auch Einheiten nach Formel (IV) enthält, eine rein statistische Verteilung der Komponenten entsprechend der molaren Verhältnisse der Ausgangsprodukte unter Berücksichtigung der im Fall der Einheiten nach Formel (I) und (II) jeweils vorhandenen Siliciumgruppierungen nach Formel (III) und der Funktionalität der Vernetzergruppierung nach Formel (IV) gegeben ist. Im Falle eines sog. Block-Copolykondensates liegt eine Bildung von Blöcken gleicher Einheiten nach Formel (I) und (II) und gegebenenfalls (IV) vor. Schließlich weist ein sog. gemischtes Copolykondensat sowohl Strukturen eines statistischen Copolykondensates als auch eines Block-Copolykondensates auf. Dabei können die Einheiten nach Formel (I) oder Formel (II), oder Formel (IV) sowohl als statistisches als auch als Block-Copolykondensat vorliegen.

Besondere Vorteile bezüglich der Verfügbarkeit der Ausgangsmaterialien und der stofflichen Eigenschaften werden mit Copolymeren gemäß Anspruch 3 erreicht.

Gegenstand der Erfindung sind auch die in den Ansprüchen 4 - 17 beschriebenen Verfahren zur Herstellung der erfindungsgemäßen Copolykondensate. Ein Verfahren, nach dem statistische Copolykondensate in Kugelform erhalten werden können, ist in Anspruch 4 angegeben.

Prinzipiell können als Ausgangsstoffe für das Verfahren anstelle der Alkoxysilylaminverbindungen auch die entsprechenden Halogenid- oder Phenoxyverbindungen eingesetzt werden, doch bietet deren Verwendung keine Vorteile, sondern kann, z. B. im Fall der Chloride, Schwierigkeiten durch die bei der Hydrolyse freiwerdende Salzsäure verursachen.

Die Hydrolyse von Ausgangsstoff und gegebenenfalls Vernetzer muß in einem weitgehend wassermischbaren, aber die Ausgangsstoffe lösenden Lösungsmittel durchgeführt werden. Bevorzugt werden dabei Alkohole verwendet, die zu den Alkoxygruppierungen an den monomeren Vorstufen der Ausgangsstoffe bzw. an den Metallatomen der gegebenenfalls eingesetzten Vernetzer korrespondieren. Besonders geeignet ist Methanol, Ethanol-, n- und i-Propanol, n- und i-Butanol oder n-Pentanol. Auch Gemische solcher Alkohole können als Lösungsmittel bei der Hydrolyse angewandt werden (Anspruch 5). Anstelle von Alkoholen können auch andere polare Lösungsmittel, die weitgehend wassermischbar sind, eingesetzt werden, doch erweist sich dies aus verfahrenstechnischen Gründen wegen der mit dem hydrolytisch abgespaltenen Alkohol zustandekommenden Lösungsmittelgemisch als wenig sinnvoll.

Bevorzugt führt man die Hydrolyse mit einem Überschuß an Wasser über die stöchiometrisch erforderliche Menge durch (Anspruch 6). Die zur Hydrolyse benötigte Menge Wasser hängt von der Hydrolysegeschwindigkeit des jeweils verwendeten Aminoorganosilans bzw. des Vernetzers derart ab, daß mit zunehmender Menge Wasser raschere Hydrolyse erfolgt; allerdings kann eine Obergrenze durch auftretende Entmischung und Ausbildung eines Zweiphasensystems vorgegeben sein. Grundsätzlich ist eine Hydrolyse in homogener Lösung vorzuziehen. Aufgrund der genannten beiden Aspekte wird in praxi gewichtsmäßig etwas weniger Wasser verwendet als Organosilane zuzüglich Vernetzer.

Die Dauer der Hydrolyse hangt von der Hydrolyseneigung von Ausgangsstoff und/oder Vernetzer und von der Temperatur ab. Die Hydrolysebereitschaft und damit -geschwindigkeit hängt insbesondere von der Art der Silicium- bzw. Titan-, Zirkonium-, Aluminium-ständigen Alkoxygruppen ab, wobei die Methoxygruppe am schnellsten hydrolysiert und mit steigender Kettenlänge des Kohlenwasserstoffrests eine Verlangsamung eintritt. Daneben hängt die Dauer des Gesamtvorganges Hydrolyse und Polykondensation auch von der Basizität des Aminoorganosilans ab. Hydrolyse und Polykondensation können daher durch Zusatz von anderen Basen, vorzugsweise von Ammoniak oder von anorganischen oder organischen Säuren, aber auch von üblichen Kondensationskatalysatoren, wie Dibutylzinndiacetat, beschleunigt werden.

Das Erfordernis, den in Lösungsmittel gelösten und mit Wasser versetzten Ausgangsstoff unter Weiterrühren auf einer bestimmten Temperatur zu halten, resultiert daher, daß die Geschwindigkeit der sich durch

Gelierung anzeigenden Polykondensation temperaturabhängig ist.

Die in der Hydrolyse- bzw. Gelierphase anzuwendende Temperatur wird im Einzelfall empirisch festgelegt. Es wird dabei darauf geachtet, daß für den darauffolgenden nächsten Verfahrensschritt die sog. Formungsphase, eine Feststoff-freie, flüssigkeitsdurchsetzte geleeartige Masse erhalten bleibt.

Die mit der Überführung der kohärenten flüssigkeitsdurchsetzten gelartigen Masse (in der die Kondensationsreaktion weiter fortschreitet) in separate sphärische Teilchen einhergehende Formungsphase beginnt mit dem Versetzen der (an)gelierten Reaktionsmischung mit einem weitgehend wasserunlöslichen, aber die Reaktionsmischung ausreichend lösenden Lösungsmittel in der vorgesehenen Menge.

Geeignete Lösungsmittel sind z. B. lineare oder verzweigte Alkohole mit 4 bis 18 C-Atomen oder Phenole, lineare oder verzweigte symmetrische oder unsymmetrische Dialkylether sowie Di- oderTriether (wie Ethylenglycoldimethylether), chlorierte oder fluorierte Kohlenwasserstoffe, mit einer oder mehreren Alkoxygruppen substituierte Aromaten oder Aromatengemische, wie z. B. Toluol oder Xylol, weitgehend mit Wasser nicht mischbare symmetrische oder unsymmetrische Ketone.

Bevorzugt wird der (an)gelierten Reaktionsmischung jedoch ein linearer oder verzweigter Alkohol mit 4 bis 12 C-Atomen, Toluol oder o-, m-, p-Xylol, einzeln oder im Gemisch, zugesetzt (Anspruch 7).

Dieser Lösungsmittelzusatz bewirkt nach der Homogenisierung mit der Reaktionsmischung eine Verdünnung und damit eine deutliche Verlangsamung der mit Viskositätszunahme einhergehenden Kondensationsreaktion.

Die Bemessung der Menge dieses in der Formungsphase verwendeten Lösungsmittels hängt insbesondere davon ab, welche Korngröße jeweils für die geformte Organosiloxanaminverbindung angestrebt wird. Als Faustregel kann gelten, daß für grobes Korn (= Kugeln von größerem Durchmesser) wenig, für feines Korn (Kugeln von kleinerem Durchmesser) viel Lösungsmittel zu verwenden ist.

Einfluß auf die Korngröße nimmt darüber hinaus auch die Intensität, mit der das viskose Homogenisat aus Reaktionsmischung und weitgehend wasserunlöslichem Lösungsmittel in dem in der Formgebungsphase als Dispersionsmittel zugesetzten weiteren Wasser dispergiert wird. Durch starkes Rühren wird regelmäßig die Ausbildung eines feineren Korns begünstigt. Zur Stabilisierung der wäßrigen Dispersion der (jetzt Siloxan enthaltenden) organischen Phase kann eines der bekannten Dispergierhilfsmittel, wie langkettige Carbonsäuren oder deren Salze oder Polyalkylenglycole in üblichen Konzentrationen verwendet werden.

Nach einer Variante des erfindungsgemäßen Verfahrens wird ein Teil oder auch die Gesamtmenge des bei oder nach Gelierungsbeginn zuzusetzenden, weitgehend wasserunlöslichen Lösungsmittels schon in der Hydrolysestufe neben dem dort verwendeten Lösungsmittel eingesetzt (Anspruch 8). Bei Teilzugabe wird der Rest nach Gelierungsbeginn zugesetzt.

Im Extremfall der Zugabe der Gesamtmenge kann das Dispersionsmittel Wasser bei oder nach Gelierungsbeginn zugesetzt werden. Diese Variante wird dann bevorzugt angewendet, wenn das eingesetzte Organosilan- und gegebenenfalls Vernetzergemische außerordentlich hohe Hydrolyse- und Polykondensationsneigung zeigt.

Die bevorzugte Temperatur, bei der die Dispergierung der Siloxan-enthaltenden organischen Phase in der wäßrigen Phase durchgeführt und aus der dispersen Phase kugelförmiger Feststoff gebildet wird, ist in der Regel die Rückflußtemperatur der Gesamtmischung. Grundsätzlich können aber dieselben Temperaturen wie in der Gelierstufe angewandt werden. Die Gesamtdauer von Dispergierungsstufe und Nachreaktion beträgt in der Regel 0,5 bis 10 Stunden.

Sowohl die Gelierung als auch die Formung können bei Normaldruck oder einem Überdruck, welcher der Summe der Partialdrucke der Komponenten der Reaktionsmischung bei der jeweils angewandten Temperatur entspricht, durchgeführt werden (Anspruch 9).

Bei der Herstellung der erfindungsgemäßen geformten vernetzten oder unvernetzten Organosiloxanamin-Copolykondensate kann der Fall eintreten, daß eine oder mehrere Komponenten der zu gelierenden Mischung ein unterschiedliches Hydrolyse- und Polykondensationsverhalten besitzen. In diesem Fall sieht eine Ausgestaltung des erfindungsgemäßen Verfahrens vor, den oder die Vernetzer (VIII) und/oder das funktionelle Organosilan (VI) nicht gemeinsam mit dem Aminoorganosilan (V) der Gelierung zu unterwerfen, sondern das Aminoorganosilan (V), gegebenenfalls zusammen mit dem Vernetzer (VIII) oder dem Organosilan (VI), zunächst separat zu gelieren, mit dem weitgehend wasserunlöslichen Lösungsmittel zu homogenisieren und erst dann den oder die Vernetzer oder das Organosilan dem Homogenisat zuzusetzen (Anspruch 10).

Es können aber auch dem gelierten Aminoorganosilan und gegebenenfalls Vernetzer oder Organosilan gleichzeitig das Lösungsmittel und die noch fehlende Silankomponente zugegeben werden.

Die Abtrennung des kugelig geformten feuchten Produktes von dem flüssigen Dispersionsmittel kann durch übliche Maßnahmen, wie Dekantieren, Abfiltrieren oder Zentrifugieren erfolgen. Im Rahmen der weiteren Aufarbeitung kann man den feuchten Feststoff ein- oder mehrmals mit einem niedrigsiedenden Extraktionsmittel, bevorzugt einem niedrigsiedenden Alkohol, behandeln, um durch zumindest teilweisen Austausch des

meist relativ hochsiedenden Lösungsmittels der Formungsphase gegen das niedrigsiedende Extraktionsmittel die spätere Trocknung des geformten Materials zu erleichtern.

Die Trocknung kann grundsätzlich bei Raumtemperatur bis 250° C, gegebenenfalls unter Schutzgas oder im Vakuum, durchgeführt werden. Zur Härtung und Stabilisierung kann der getrocknete geformte Feststoff bei Temperaturen von 150 bis 300° C getempert werden.

Das getrocknete bzw. getemperte Produkt kann in üblichen Vorrichtungen in verschiedene Korngrößenfraktionen klassifiziert werden. Von den Aufarbeitungsmaßnahmen Extraktion, Trocknung, Temperung und Klassifizierung kann, je nach den Umständen, die eine oder andere entfallen. Eine Klassifikation kann an flüssigkeitsfeuchtem, getrocknetem oder getempertem Produkt durchgeführt werden.

Um ein unterschiedliches Hydrolyse- und Polykondensationsverhalten der monomeren Komponenten eines statistischen, gegebenenfalls vernetzten Copolykondensates auszugleichen, können nach der in Anspruch 11 angegebenen Herstellungsvariante die monomeren Komponenten nach Formel (V) und (VI) und der oder die gegebenenfalls vorhandenen Vernetzer nach Formel (VIII) zunächst vorkondensiert werden. Hierzu wird das Aminosilan nach Formel (V), die Monomerkomponente nach Formel (VI) und der oder die Vernetzer nach Formel (VIII) ohne oder unter Verwendung eines die Monomerkomponenten lösenden Lösungsmittel, bevorzugt unter Verwendung eines zu den Alkoxygruppen korrespondierenden Alkohols mit 1 bis 5 C-Atomen, in Gegenwart einer nicht zur vollständigen Hydrolyse ausreichenden Menge Wasser, vorzugsweise von 1 bis 100 Mol% der hierzu benötigten Menge, über einen Zeitraum von 5 Minuten bis zu 48 Stunden bei Raumtemperatur bis 200° C vorkondensiert. Um diesen Vorkondensationseffekt zu begünstigen kann dabei, zusätzlich zu dem vorhandenen Aminoorganosilan, noch ein weiterer Kondensationskatalysator, wie z. B. eine anorganische oder organische Säure oder Base oder ein Metall-haltiger Kondensationskatalysator, wie beispielsweise Dibutylzinndiacetat, zugesetzt werden. Bevorzugt wird Ammoniak verwendet (Anspruch 12). Nach erfolgter Vorkondensation wird die vollständige Hydrolyse und Polykondensation wie beschrieben durchgeführt.

Nach einer anderen erfindungsgemäßen Verfahrensvariante werden sog. Block-Copolykondensate erhalten, bei denen eine Bildung von Blöcken gleicher Einheiten nach Formel (I) und (II) und gegebenenfalls einer oder mehrerer Einheiten nach Formel (IV) vorliegt. Dieses Verfahren ist im Anspruch 13 angegeben.

Die in Anspruch 13 beschriebene Vorkondensation kann ebenfalls durch den Zusatz einer geringen Menge eines sauren oder basischen oder auch eines metall-haltigen Kondensationskatalysators beschleunigt werden; bevorzugt wird Ammoniak verwendet (Anspruch 14).

Die Menge Wasser, die zur Vorkondensation verwendet wird, hängt davon ab, welcher Oligomerisierungsgrad, d. h. welche Blockgröße erreicht werden soll. Bei Einsatz von mehr Wasser zur Vorkondensation entstehen natürlich größere Einheiten als bei Verwendung von weniger Wasser. Die Dauer der Vorkondensation hängt, wie bereits vorstehend beschrieben, generell von der Hydrolysebereitschaft der monomeren Komponenten und der Temperatur ab.

Nach einer weiteren erfindungsgemäßen Verfahrensvariante werden sog. gemischte Copolykondensate erhalten, bei denen teilweise eine Bildung von Blöcken gleicher Einheiten nach Formel (I) und/oder Formel (II) und/oder einer oder mehrerer Einheiten nach Formel (IV) vorliegt, bei denen stets jedoch mindestens eine monomere Komponente nicht vorkondensiert und mindestens eine monomere Komponente vorkondensiert wird. Dieses Verfahren ist im Anspruch 15 angegeben.

Es sieht vor, daß man von den vorgesehenen Monomeren der allgemeinen Formeln (V), (VI) und gegebenenfalls (VIII) mindestens ein Monomer oder mehrere Monomere voneinander unabhängig, wie vorstehend beschrieben, vorkondensiert und anschließend mit dem oder den verbleibenden, nicht vorkondensierten Monomeren vereinigt und dann nach Zusatz weiteren Wassers sowie gegebenenfalls weiteren Lösungsmittels die vollständige Hydrolyse und Polykondensation der Gesamtmischung vollzieht. Die weitere Behandlung des dabei gebildeten Polykondensates gestaltet sich dann wie bei den anderen beschriebenen Verfahren.

Eine besonders wichtige Ausführungsform der erfindungsgemäßen Verfahren sieht vor, das noch lösungsmittel- und wasserfeuchte bzw. -nasse kugelförmige Material einer Temperaturbehandlung während 1 Stunde bis zu einer Woche bei Temperaturen von 50 bis 300° C, vorzugsweise 100 bis 200° C, zu unterwerfen, wobei bedarfsweise Überdruck angewendet wird.

Diese Behandlung unter "dämpfenden" bzw. digerierenden Bedingungen dient ebenfalls überwiegend einer Verbesserung der mechanischen Festigkeit und der Porosität des geformten Materials und kann auch in der zuletzt vorliegenden, eine flüssige und die feste Produktphase enthaltenden Dispersion des Herstellungsganges oder in Wasser allein durchgeführt werden.

Die vorstehend beschriebene Ausführungsform einer Nachbehandlung der erhaltenen, aber nicht getrockneten geformten Organosiloxan-Copolykondensate besteht also darin, den in Form von Kugeln ausgebildeten Feststoff in Anwesenheit mindestens der Komponente Wasser bzw. der im Herstellungsgang zuletzt vorliegenden flüssigen Phase als Dampf oder Flüssigkeit, einer Temperaturbehandlung während 1 Stunde bis zu einer Woche bei Temperaturen von 50 bis 300° C, vorzugsweise 100 bis 200° C, gegebenenfalls unter Überdruck, zu unterwerfen (Anspruch 16). Dabei kann die Anwesenheit eines sauren, basischen oder metall-haltigen Katalysators von Vorteil sein. Eine besonders vorteilhafte Ausführungsform sieht die Verwendung von Ammoniak vor (Anspruch 17).

Charakterisiert sind die neuen geformten Organosiloxanamin-Copolykondensate insbesondere anhand der quantitativen Hydrolyseausbeuten, der Elementaranalysen und durch die Bestimmung der einzelnen Funktionalitäten. Zwischen den nach den unterschiedlichen Herstellungsverfahren erhaltenen Copolykondensaten besteht rein optisch kein Unterschied. Je nach Vorbehandlung besitzen die kugelig geformten erfindungsgemäßen Copolykondensate einen Teilchendurchmesser von 0,01 bis 3,0 mm, vorzugsweise 0,05 bis 2,0 mm, eine spezifische Oberfläche von bis zu 1000 $m^2/g$, vorzugsweise bis zu 700 $m^2/g$, ein spezifisches Porenvolumen von bis zu 6,0 ml/g und eine Schüttdichte von 50 bis 1000 g/l, vorzugsweise 100 bis 800 g/l. Die einstellbaren Porendurchmesser liegen im Bereich bis über 1000 nm.

Die chemische Stabilität der geformten Produkte ist mit denen der ungeformten Produkte vergleichbrar, d. h. in Abhängigkeit von den einzelnen Funktionalitäten liegen sie an der Luft bei deutlich über 150° C und unter Schutzgasatmosphäre bei über 200° C.

Neben der generellen Verwendbarkeit der geformten Copolykondpnsate als Wirkstoffträger im breitesten Sinne besteht ein weiterer Gegenstand der Erfindung in der Verwendung von Copolykondensaten, in denen X für die komplexierenden Gruppen

$-NH_2$, $-N(CH_3)_2$, $-N(C_2H_5)_2$, $-NH_2-(CH_2)_2-NH_2$,
$-NH-(CH_2)_2-NH-(CH_2)_2-NH_2$, -CN,
-SH, $-P(C_6H_5)_2$,

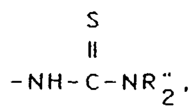, 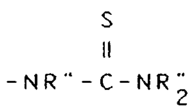

steht, zur Entfernung von gelösten Metallen aus einer flüssigen wäßrigen oder organischen Phase nach dem statischen oder dynamischen Prinzip (Anspruch 18).

Eine weitere Verwendung aller erfindungsgemäßen Copolykondensate ist der Einsatz zur adsorptiven Bindung von gasförmigen organischen Lösungsmitteln (Anspruch 19). Entscheidend für diese Fähigkeit zur Adsorption sind vor allem das spezifische Porenvolumen, der Porendurchmesser und die Oberflächeneigenschaften. Diese Faktoren können einerseits über die erfindungsgemäßen Herstellungs- und Nachbehandlungsverfahren sowie andererseits auch über die chemische Zusammensetzung, z. B. durch den Einbau hydrophobierend wirkender Vernetzergruppen in das Polysiloxangerüst oder geeigneter Funktionalitäten beeinflußt werden.

## Patentansprüche

1. Geformte Organosiloxan-Copolykondensate, in Form makroskopisch kugelförmiger Teilchen mit einem Durchmesser von 0,01 bis 3,0 mm, einer spezifischen Oberfläche bis zu 1000 $m^2/g$, einem spezifischen Porenvolumen bis 5,0 ml/g sowie einer Schüttdichte von 50 bis 1000 g/l, bestehend aus Einheiten der Formel

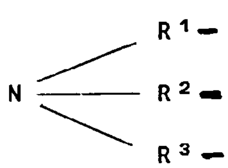 (I)

und aus Einheiten der Formel

$$X - R^4- \quad (II)$$

wobei $R^1$ bis $R^4$ gleich oder verschieden sind und eine Gruppe der allgemeinen Formel

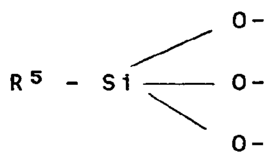 (III)

bedeuten,
wobei $R^5$ direkt an das Stickstoffatom bzw. den einbindigen Rest gebunden ist und eine lineare oder verzweigte Alkylengruppe mit 1 bis 10 C-Atomen, eine Cycloalkylengruppe mit 5 bis 8 C-Atomen oder eine Einheit der allgemeinen Formel

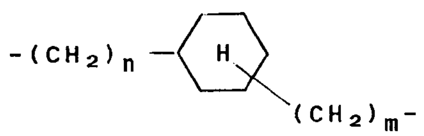 oder 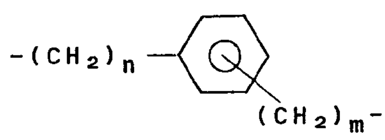

darstellt, in der n eine Zahl von 1 bis 6 ist und die Zahl stickstoffständiger bzw. X-ständiger Methylengruppen angibt und m eine Zahl von 0 bis 6 ist,
wobei die freien Valenzen der an das Siliciumatom gebundenen Sauerstoffatome wie bei Kieselsäuregerüsten durch Siliciumatome weiterer Gruppen der Formel (III) und/oder über die Metallatome in einem oder mehreren vernetzenden Brückengliedern

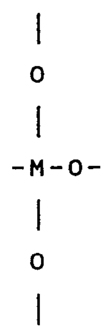 oder 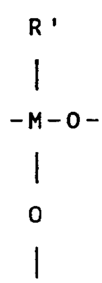 oder 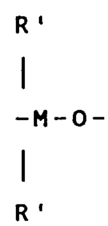

bzw. (IV)

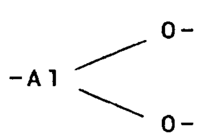 oder 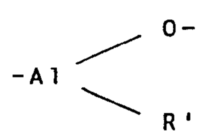

abgesättigt sind,
wobei M ein Silicium-, Titan- oder Zirkoniumatom und R' eine lineare oder verzweigte Alkylgruppe mit 1 bis 5 C-Atomen oder eine Phenylgruppe ist und das Verhältnis der Siliciumatome aus den Gruppen der allgemeinen Formel (III) zu den Metallatomen in den Brückengliedern 1 : 0 bis 1 : 20 beträgt und X in Formel (II) für
$-NH_2$, $-N(CH_3)_2$, $-N(C_2H_5)_2$, $-NH-(CH_2)_2-NH_2$,
$-NH-(CH_2)_2-NH-(CH_2)_2-NH_2$, -Cl, -Br, -J, 2SH, $-P(C_6H_5)_2$, -CN,

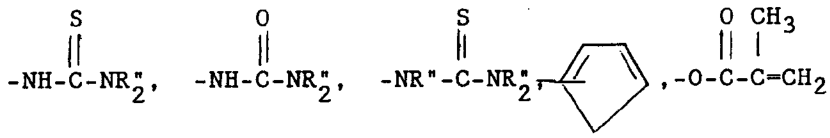

steht,
wobei R" gleich H oder eine lineare oder verzweigte Alkylgruppe mit 1 bis 5 C-Atomen oder eine Gruppe $(CH_2)_n$-$NR_2''$ ist, wobei n eine Zahl von 1 bis 6 bedeutet und R' dieselbe Bedeutung wie R" hat, wobei das Verhältnis von Einheiten nach Formel (I) zu Einheiten nach Formel (II) von 0,03 : 99,97 bis 99,99 : 0,01 beträgt.

2. Geformte Organosiloxan-Copolykondensate gemäß Anspruch 1,
**dadurch gekennzeichnet,**
daß sie als sog. statistische Copolykondensate, Block-Copolykondensate oder als gemischte Copolykondensate vorliegen.

3. Geformte Organosiloxan-Copolykondensate gemäß Ansprüch en 1 oder 2,
**dadurch gekennzeichnet,**
daß $R^1$ bis $R^4$ für eine Gruppe der allgemeinen Formel

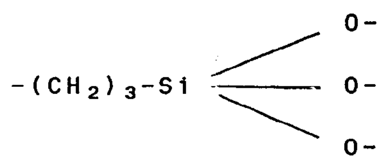

stehen.

4. Verfahren zur Herstellung von geformten statistischen Organosiloxanamin-Copolykondensaten gemäß Ansprüchen 1 bis 3,
**dadurch gekennzeichnet,**
daß man ein tertiäres Aminoorganosilan der allgemeinen Formel

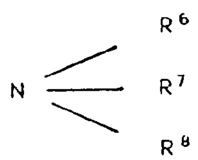 (V)

zusammen mit einem organofunktionellen Silan

$$X - R^9 \qquad (VI)$$

entsprechend der gewünschten stöchiometrischen Zusammensetzung des herzustellenden Copolykondensates, wobei $R^6$ bis $R^5$ gleich oder verschieden sind und eine Gruppe der allgemeinen Formel

$$R^5\text{-}Si(OR^{10})_3 \qquad (VII)$$

bedeuten,
$R^5$ dieselbe Bedeutung wie in Formel (III) hat,
$R^{10}$ eine lineare oder verzweigte Alkylgruppe mit 1 bis 5 C-Atomen bedeutet und
X dieselbe Bedeutung wie in Formel (II) hat, gegebenenfalls nach Zusatz eines oder mehrerer Vernetzer der allgemeinen Formel

$$M(OR)_{2\text{-}4}\, R'_{0\text{-}2} \text{ bzw. } M(OR)_{2\text{-}3}\, R'_{0\text{-}1} \qquad (VIII)$$

wobei M ein Silicium-, Titan-, Zirkon- oder Aluminiumatom,
R' eine lineare oder verzweigte Alkylgruppe mit 1 bis 5 C-Atomen oder eine Phenylgruppe ist und R eine lineare oder verzweigte Alkylgruppe mit 1 bis 5 C-Atomen bedeutet und das Verhältnis der Siliciumatome aus den Gruppen der allgemeinen Formel (VII) zu den Metallatomen in den Brückengliedern 1 : 0 bis 1 : 20 beträgt,

in einem weitgehend wassermischbaren, aber Aminoorganosilan nach Formel (V) und organofunktionelles Silan nach Formel (VI) sowie Vernetzer nach Formel (VIII) lösenden Lösungsmittel auflöst und der Lösung unter Rühren eine zumindest für die vollständige Hydrolyse und Kondensation ausreichende Menge Wasser zufügt. dann das Reaktionsgemisch unter Weiterrühren bei einer bestimmten Temperatur im Bereich von Raumtemperatur bis 200° C unter der Maßgabe gelieren läßt, daß es bei Gelierungsbeginn oder bis zu einer Stunde danach mit 10 bis 2000, vorzugsweise 50 bis 500 Gew.-%, bezogen auf die Gesamtmenge von Aminoorganosilan (V), organofunktionelles Silan (VI) und gegebenenfalls Vernetzer (VIII), eines weitgehend wasserunlöslichen, aber die (an)gelierte Reaktionsmischung lösenden Lösungsmittels versetzt und homogenisiert wird,
dem viskosen Homogenisat sofort oder im Zeitraum bis zu 3 Stunden, gegebenenfalls unter Erhöhung der ursprünglich eingestellten Temperatur, 10 bis 2000 Gew.%, vorzugsweise 5 bis 500 Gew.%, bezogen auf die Gesamtmenge von Aminoorganosilan (V),
organofunktionelles Silan (VI) und gegebenenfalls Vernetzer (VIII), Wasser zugibt, die jetzt Siloxanenthaltende organische Phase in dem flüssigen Zweiphasensystem dispergiert und den sich in Form von Kugeln bildenden Feststoff nach dafür ausreichender Reaktionszeit bei Raumtemperatur bis 200° C von der flüssigen Phase abtrennt und dann gegebenenfalls extrahiert, bei Raumtemperatur bis 250° C, gegebenenfalls unter Schutzgas oder im Vakuum trocknet und 1 bis 100 Stunden bei Temperaturen von 150° C bis 300° C tempert und/oder klassifiziert.

5. Verfahren gemäß Anspruch 4,
**dadurch gekennzeichnet,**
daß als Lösungsmittel bei der Hydrolyse Methanol, Ethanol, n- und i-Propanol, n- und i-Butanol oder n-Pentanol allein oder in Mischung verwendet wird.

6. Verfahren nach Anspruch 4 oder 5,
**dadurch gekennzeichnet,**
daß man die Hydrolyse mit Wasserüberschuß durchführt.

7. Verfahren nach einem oder mehreren der Ansprüche 4 bis 6,
**dadurch gekennzeichnet,**
daß der (an)gelierten Reaktionsmischung ein linearer oder verzweigter Alkohol mit 4 bis 12 C-Atomen, Toluol oder o-, m-, p-Xylol, einzeln oder im Gemisch, zugesetzt wird.

8. Verfahren nach einem oder mehreren der Ansprüche 4 bis 7,
**dadurch gekennzeichnet,**
daß ein Teil oder auch die Gesamtmenge des bei oder nach Gelierungsbeginn zuzusetzenden weitgehend wasserunlöslichen Lösungsmittels schon in der Hydrolysestufe neben dem dort verwendeten Lösungsmittel eingesetzt wird.

9. Verfahren nach einem oder mehreren der Ansprüche 4 bis 8,
**dadurch gekennzeichnet,**
daß man Gelierung und Formung bei Normaldruck oder einem Überdruck, welcher der Summe der Partialdrucke der Komponenten der Reaktionsmischung bei der jeweils angewandten Temperatur entspricht, durchführt.

10. Verfahren nach einem oder mehreren der Ansprüche 4 - 9,
**dadurch gekennzeichnet,**
daß man das Aminoorganosilan nach Formel (V) allein oder zusammen mit dem Vernetzer (VIII) und/oder dem organofunktionellen Silan (VI) separat geliert, mit dem weitgehend wasserunlöslichen Lösungsmittel homogenisiert und erst dann die noch fehlenden Komponenten für das Copolykondensat dem Homogenisat zusetzt.

11. Verfahren nach einem oder mehreren der Ansprüche 4 bis 9,
**dadurch gekennzeichnet,**
daß man zur Gewinnung geformter statistischer Copolykondensate das Aminoorganosilan gemäß Formel (V), das organofunktionelle Silan (VI) und den oder die Vernetzer nach Formel (VIII) über einen Zeitraum von 5 Min. bis zu 48 Stunden ohne oder unter Verwendung eines die Monomerkomponenten lösenden Lösungsmittels. bevorzugt unter Verwendung eines zu den Alkoxygruppen korrespondierenden Alkohols mit 1 bis 5 C-Atomen, in Gegenwart einer nicht zur vollständigen Hydrolyse ausreichenden Menge Wasser, vorzugsweise von 1 bis 100 Mol% der hierzu benötigten Menge bei Raumtemperatur bis 200° C vorkondensiert.

**12.** Verfahren gemäß Anspruch 11,
**dadurch gekennzeichnet,**
daß die Vorkondensation in Gegenwart eines sauren, basischen oder metallhaltigen Kondensationskatalysators, vorzugsweise in Gegenwart von Ammoniak, durchgeführt wird.

**13.** Verfahren zur Herstellung von geformten Block-Copolykondensaten gemäß Ansprüchen 1 bis 3,
**dadurch gekennzeichnet,**
daß man ein tertiäres Aminoorganosilan der allgemeinen Formel (V) und ein organofunktionelles Silan der Formel (VI),wobei $R^6$ bis $R^9$ sowie X den Bedeutungsumfang wie in Anspruch 4 haben, und gegebenenfalls einen oder mehrere Vernetzer der allgemeinen Formel (VIII), jeweils unabhängig voneinander ohne oder unter Verwendung eines Lösungsmittels, in Gegenwart einer nicht zur vollständigen Hydrolyse ausreichenden Menge Wasser, vorzugsweise in Gegenwart von 1 bis 100 Mol% der hierzu benötigten Menge, über einen Zeitraum von 5 Min. bis zu 48 Stunden bei Raumtemperatur bis 200° C zunächst vorkondensiert und anschließend vereinigt und dann nach Zusatz weiteren Wassers und gegebenenfalls weiteren Lösungsmittels, so daß mindestens die für eine vollständige Hydrolyse und Polykondensation stöchiometrisch erforderliche Menge Wasser anwesend ist, die vollständige Hydrolyse und Polykondensation durchführt.

**14.** Verfahren gemäß Anspruch 13,
**dadurch gekennzeichnet,**
daß die Vorkondensation in Gegenwart eines sauren, basischen oder metallhaltigen Kondensationskatalysators, vorzugsweise in Gegenwart von Ammoniak, durchgeführt wird.

**15.** Verfahren zur Herstellung von geformten gemischten Copolykondensaten gemäß Anspruch 1 bis 3,
**dadurch gekennzeichnet,**
daß man von den vorgesehenen monomeren Komponenten nach Formel (V), (VI) und (VIII) mindestens eines voneinander unabhängig 5 Min. bis 48 Stunden ohne oder unter Verwendung eines Lösungsmittels, in Gegenwart einer nicht zur vollständigen Hydrolyse ausreichenden Menge Wasser, vorzugsweise in Gegenwart von 1 bis 100 Mol% der hierzu benötigten Menge bei Raumtemperatur bis 200° C vorkondensiert und dann mit dem bzw. den nicht vorkondensierten Monomeren vereinigt und schließlich nach Zusatz weiteren Wassers und gegebenenfalls weiteren Lösungsmittels die vollständige Hydrolyse und Polykondensation gemäß Anspruch 4 durchführt.

**16.** Verfahren zur Nachbehandlung der nach einem oder mehreren der Ansprüche 4 bis 15 erhaltenen, aber nicht getrockneten geformten Organosiloxan-Copolykondensate,
**dadurch gekennzeichnet,**
daß der in Form von Kugeln ausgebildete Feststoff in Anwesenheit mindestens der Komponente Wasser in der flüssigen Phase einer Temperaturbehandlung während 1 Stunde bis zu einer Woche bei 50° C bis 300° C, vorzugsweise 100 bis 200° C, unterzogen wird, wobei bedarfsweise Überdruck angewendet wird.

**17.** Verfahren gemäß Anspruch 16,
**dadurch gekennzeichnet,**
daß die Nachbehandlung in Gegenwart eines sauren, basischen oder metallhaltigen Katalysators, vorzugsweise in Gegenwart von Ammoniak, durchgeführt wird.

**18.** Verwendung der erfindungsgemäßen geformten Organosiloxanamin-Copolykondensate gemäß Anspruch 1 bis 3, bei denen
X für $-NH_2$, $-N(CH_3)_2$, $-N(C_2H_5)_2$, $-NH-(CH_2)_2-NH_2$, $-NH-(CH_2)_2-NH-(CH_2)_2-NH_2$, -SH, $-P(C_6H_5)_2$, -CN,

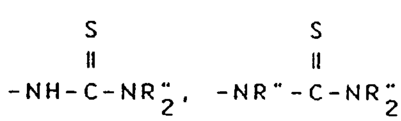

steht, wobei R' und R" dieselbe Bedeutung wie in Anspruch 1 haben,

zur Entfernung von gelösten Metallen aus wäßrigen oder organischen Lösungen nach dem statischen oder dynamischen Prinzip.

19. Verwendung der erfindungsgemäßen geformten Organosiloxanamin-Copolykondensate gemäß den Ansprüchen 1 bis 3 zur Adsorption von gasförmigen organischen Verbindungen und/oder von Wasserdampf, vorzugsweise zur Adsorption von organischen Lösungsmitteln.

## Claims

1. Shaped organosiloxane copolycondensates in the form of macroscopically spherical particles having a diameter of from 0.01 to 3.0 mm, a specific surface area of up to 1000 $m^2/g$, a specific pore volume up to 5.0 ml/g and a bulk density of from 50 to 1000 g/l, consisting of units of the formula

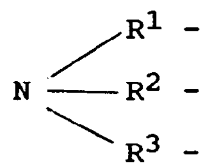

(I)

and of units of the formula

$$X - R^4 - \qquad (II)$$

wherein $R^1$ to $R^4$ are identical or different and denote a group of the general formula

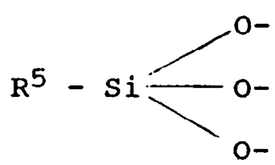

(III)

wherein $R^5$ is directly attached to the nitrogen atom or to the single bonded residue and denotes a straight chain or branched alkylene group having 1 to 10 carbon atoms, a cycloalkylene group having 5 to 8 carbon atoms or a unit corresponding to the following general formula

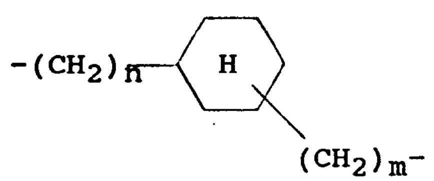

or

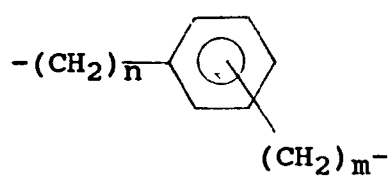

in which n is a number from 1 to 6 and stands for the number of methylene groups attached to nitrogen or attached to X and m is a number from 0 to 6, the free valencies of the oxygen atoms attached to the silicon atom being saturated, as in silica structures, by silicon atoms of other groups of the formula (III) and/or via the metal atoms in one or more cross-linking bridging members

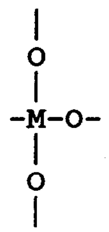 or 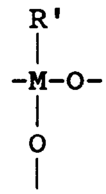 or 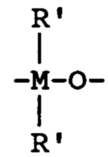

or (IV)

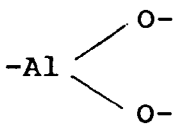 or 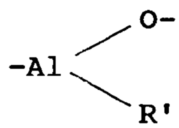

wherein M is a silicon, titanium or zirconium atom and R' is a straight chain or branched alkyl group having 1 to 5 carbon atoms or a phenyl group and the ratio of silicon atoms from the groups of the general formula (III) to the metal atoms in the bridging members is from 1 : 0 to 1 : 20 and
X in formula (II) stands for
$-NH_2$, $-N(CH_3)_2$, $-N(C_2H_5)_2$, $-NH-(CH_2)_2-NH_2$,
$-NH-(CH_2)_2-NH-(CH_2)_2-NH_2$, -Cl, -Br, -I, 2SH,
$-P(C_6H_5)_2$, -CN,

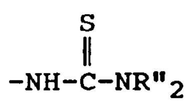 ,

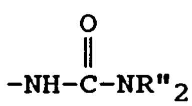, 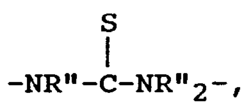, 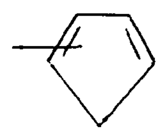 ,

or

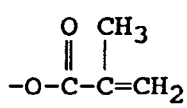

wherein
R" denotes H or a straight chain or branched alkyl group having 1 to 5 carbon atoms or a group of the formula $(CH_2)_n-NR"_2$ wherein n stands for a number from 1 to 6 and R' has the same meaning as R", the ratio of units corresponding to formula (I) to units corresponding to formula (II) having a value of from 0.03 : 99.97 to 99.99 : 0.01.

2. Shaped organosiloxane copolycondensates according to Claim 1, characterised in that they exist as so-called random copolycondensates, block copolycondensates or mixed copolycondensates.

3. Shaped organosiloxane copolycondensates according to Claim 1 or Claim 2, characterised in that $R^1$ to $R^4$ denote a group of the general formula

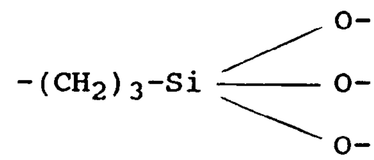

4. A process for the preparation of shaped random organosiloxanamine copolycondensates according to Claims 1 to 3, characterised in that a tertiary amino organosilane of the general formula

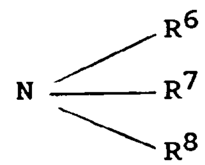 (V)

is dissolved together with an organofunctional silane

$$X - R^9 \quad (VI)$$

in accordance with the desired stoichiometric composition of the copolycondensates to be produced, wherein $R^6$ to $R^9$ are identical or different and denote a group corresponding to the general formula

$$R^5\text{-}Si(OR^{10})_3 \quad (VII),$$

$R^5$ has the same meaning as in formula (III),
$R^{10}$ denotes a straight chain or branched alkyl group having 1 to 5 carbon atoms and
X has the same meaning as in formula (II), optionally after the addition of one or more crosslinking agents corresponding to the general formula

$$M(OR)_{2-4}\, R'_{0-2} \text{ or } M(OR)_{2-3}\, R'_{0-1} \quad (VIII)$$

wherein
M denotes a silicon, titanium, zirconium or aluminium atom,
R' stands for a straight chain or branched alkyl group having 1 to 5 carbon atoms or a phenyl group and
R denotes a straight chain or branched alkyl group having 1 to 5 carbon atoms and the ratio of silicon atoms from the groups corresponding to the general formula (VII) to the metal atoms in the bridging members is from 1 : 0 to 1 : 20,
in a solvent which is substantially water-miscible but dissolves aminoorganosilane corresponding to formula (V) and organofunctional silane corresponding to formula (VI) and cross-linking agents corresponding to formula (VIII), and water is added to the solution with stirring in a quantity at least sufficient for complete hydrolysis and condensation, the reaction mixture is then left to gel with continued stirring at a particular temperature in the range of from room temperature to 200°C under the condition that at the onset of gelling or up to one hour thereafter from 10 to 2000% by weight, preferably from 50 to 500% by weight, based on the total quantity of aminoorganosilane (V), organo-functional silane (VI) and optionally cross-linking agent (VIII), of a solvent which is substantially water-insoluble but dissolves the (partially) gelled reaction mixture are added and the mixture is homogenised, from 10 to 2000% by weight of water, preferably from 5 to 500% by weight of water, based on the total quantity of aminorganosilane (V), organofunctional silane (VI) and optionally cross-linking agent (VIII), is added to the viscous homogeneous mixture either immediately or within a period of up to 3 hours, optionally with raising of the originally adjusted temperature, the organic phase which now contains siloxane is dispersed in the liquid diphasic system and the solid which develops in the form of spheres is separated from the liquid phase after a sufficient reaction time for this purpose at a temperature from room temperature up to 200°C and the solid is then optionally extracted, dried at a temperature from room temperature to 250°C, optionally under a protective gas or in a vacuum, and tempered at temperatures of from 150°C to 300°C for a period of from 1 to 100 hours and/or classified.

5. A process according to Claim 4, characterised in that the solvent used for hydrolysis is methanol, ethanol, n- and i-propanol, n- and i-butanol or n-pentanol, alone or as mixture.

6. A process according to Claim 4 or 5, characterised in that hydrolysis is carried out with an excess of water.

7. A process according to one or more of Claims 4 to 6, characterised in that a straight chain or branched alcohol having 4 to 12 carbon atoms, toluene or o-, m- or p-xylene is added to the (partly) gelled reaction mixture, either singly or as mixture.

8. A process according to one or more of Claims 4 to 7, characterised in that part or all of the substantially water-insoluble solvent to be added at or after the onset of gelling is already used at the stage of hydrolysis in addition to the solvent used at that stage.

9. A process according to one or more of Claims 4 to 8, characterised in that gelling and shaping are carried out at normal pressure or at an excess pressure corresponding to the sum of partial pressures of the components of the reaction mixture at the temperature employed.

10. A process according to one or more of Claims 4 to 9, characterised in that the aminoorganosilane of formula (V) is gelled separately, alone or together with the cross-linking agent (VIII) and/or the organofunctional silane (VI) and is homogenised with the substantially water-insoluble solvent,and the still missing components for the copolycondensate are only then added to the homogenised mixture.

11. A process according to one or more of Claims 4 to 9, characterised in that for obtaining shaped random copolycondensates of the aminoorganosilane corresponding to formula (V), the organo-functional silane (VI) and the one or more than one cross-linking agent corresponding to formula (VIII) are precondensed over a period of from 5 minutes to 48 hours at a temperature from room temperature to 200°C with or without a solvent which dissolves the monomer components, preferably using an alcohol having 1 to 5 carbon atoms corresponding to the alkoxy groups, in the presence of a quantity of water not sufficient for complete hydrolysis, preferably from 1 to 100 mol-% of the quantity required for complete hydrolysis.

12. A process according to Claim 11, characterised in that precondensation is carried out in the presence of an acid, basic or metal-containing condensation catalyst, preferably in the presence of ammonia.

13. A process for the preparation of shaped block copolycondensates according to Claims 1 to 3, characterised in that a tertiary aminoorganosilane corresponding to the general formula (V) and an organofunctional silane corresponding to formula (VI) wherein $R^6$ to $R^9$ and X have the range of meanings indicated in Claim 4 and optionally one or more cross-linking agents corresponding to the general formula (VIII) are first precondensed, independently of one another, over a period of from 5 minutes to 48 hours at a temperature from room temperature to 200°C with or without a solvent and in the presence of a quantity of water insufficent for complete hydrolysis, preferably in the presence of from 1 to 100 mol-% of the quantity of water required for complete hydrolysis, and the precondensed components are then combined and complete hydrolysis and polycondensation are carried out after the addition of a further quantity of water and optionally a further quantity of solvent so that water is present in at least the stoichiometric quantity required for complete hydrolysis and polycondensation.

14. A process according to Claim 13, characterised in that precondensation is carried out in the presence of an acid, basic or metal-containing condensation catalyst, preferably in the presence of ammonia.

15. A process for the preparation of shaped mixed copolycondensates according to Claims 1 to 3, characterised in that at least one of the monomer components corresponding to formulae (V), (VI) and (VIII) is precondensed independently of the others at a temperature from room temperature to 200°C with or without a solvent in the presence of a quantity of water not sufficient for complete hydrolysis, preferably in the presence of from 1 to 100 mol-% of the quantity required for this purpose, and this component or these components is or are then combined with the monomer or monomers which have not been precondensed, and complete hydrolysis and polycondensation are finally carried out according to Claim 4 after the addition of a further quantity of water and optionally a further quantity of solvent.

16. A process for the after-treatment of the shaped organosiloxane copolycondensates obtained according to one or more of Claims 4 to 15 but not dried, characterised in that the solid obtained in the form of spheres is subjected in the liquid phase, in the presence of at least the water constituting one of the components, to a heat treatment at from 50°C to 300°C, preferably from 100 to 200°C, for a period of from one hour to one week, optionally with the employment of excess pressure.

17. A process according to Claim 16, characterised in that the after-treatment is carried out in the presence

of an acid, basic or metal-containing catalyst, preferably in the presence of ammonia.

**18.** Use of the shaped organosiloxanamine copolycondensates according to the invention claimed in Claims 1 to 3, in which
X stands for $-NH_2$, $-N(CH_3)_2$, $-N(C_2H_5)_2$,
$-NH-(CH_2)_2-NH_2$, $-NH-(CH_2)_2-NH-(CH_2)_2-NH_2$,
$-SH$, $-P(C_6H_5)_2$, $-CN$,

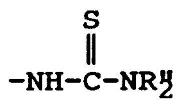 or 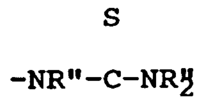

wherein R' and R" have the same meaning as in Claim 1 for the removal of dissolved metals from aqueous or organic solutions in accordance with the static or dynamic principle.

**19.** Use of the shaped organosiloxanamine copolycondensates according to the invention claimed in Claims 1 to 3 for the adsorption of gaseous organic compounds and/or of steam, preferably for the adsorption of organic solvents.

## Revendications

**1.** Copolycondensats d'organosiloxanes ayant une forme, sous forme de particules sphériques macroscopiquement, ayant un diamètre allant de 0,01 à 3,0 mm, une surface spécifique allant jusqu'à 1 000 $m^2/g$, un volume spécifique de pores allant jusqu'à 5,0 ml/g ainsi qu'une densité apparente de 50 à 1 000 g/l, qui consistent en des unités de formule :

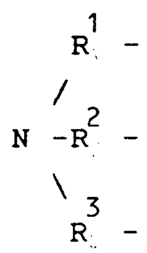 (I)

et en des unités de formule :

$$X - R^4 \qquad (II)$$

dans lesquelles $R^1$ à $R^4$ sont semblables ou différents et signifient un groupe de formule générale :

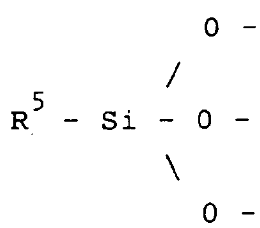 (III)

dans laquelle $R^5$ est relié directement à l'atome d'azote ou au reste à une seule liaison et représente un groupe alcoylène linéaire ou ramifié ayant de 1 à 10 atomes de carbone, un groupe cycloalcoylène ayant de 5 à 8 atomes de carbone ou une unité de formule générale :

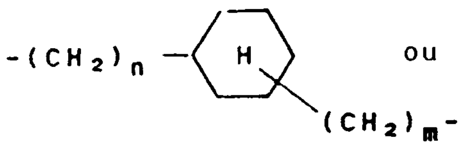

ou

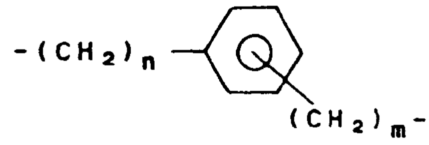

dans laquelle n est un nombre allant de 1 à 6 et indique le nombre de groupes méthylène qui se tiennent à l'azote ou qui se tiennent sur le groupe X,
et m est un nombre allant de 0 à 6,
dans lequel les valences libres des atomes d'oxygène liés à l'atome de silicium comme dans les squelettes d'acide silicique sont saturées par des atomes de silicium de groupes supplémentaires de formule (III) et/ou par l'intermédiaire des atomes métalliques dans un ou plusieurs éléments de pontage qui permettent la réticulation

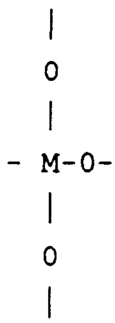

ou

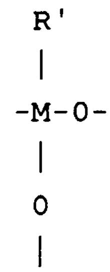

ou

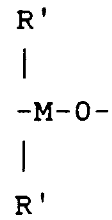

ou (IV)

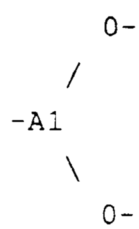

ou

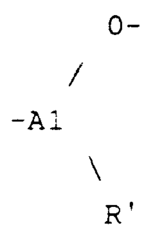

dans lesquelles M est un atome de silicium, de titane ou de zirconium et
R' un radical alcoyle linéaire ou ramifié ayant de 1 à 5 atomes de carbone ou un groupe phényle,
et le rapport des atomes de silicium provenant des groupes de formule (III) aux atomes de métal dans les éléments de pontage, s'élève de 1 : 0 à 1 : 20 et X représente dans la formule (II) : $-NH_2$, $-N(CH_3)_2$, $-H(C_2H_5)_2$, $-NH-(CH_2)_2-NH_2$,
$-NH-(CH_2)_2-NH-(CH_2)_2-NH_2$, -Cl, -Br, -J, 2SH, $-P(C_6H_5)_2$, -CN,

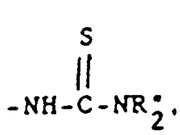, 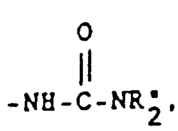, 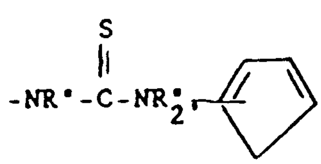, 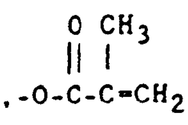

dans laquelle R" est égal à H ou à un radical alcoyle, linéaire ou ramifié, ayant de 1 à 5 atomes de carbone ou est un groupe $(CH_2)_n-NR_2'''$ dans lequel n signifie un nombre allant de 1 à 6
et R' a la même signification que R"
dans laquelle le rapport des unités selon la formule (I) aux unités selon la formule (II) s'élève de 0,03 : 99,97 à 99,99 : 0,01.

**2.** Copolycondensats d'organosiloxane façonnés, selon la revendication 1, caractérisés en ce qu'ils se présentent sous forme de ce que l'on appelle "copolycondensats statistiques", copolycondensats en blocs ou sous forme de copolycondensats mixtes.

**3.** Copolycondensats d'organosiloxane ayant une forme selon la revendication 1 ou la revendication 2, caractérisé en ce que $R^1$ à $R^4$ représentent un groupe de formule générale :

O -
/
$- (CH_2)_3 -$ Si - O -
\
O -

**4.** Procédé d'obtention de copolycondensats d'organosiloxanamines statistiques ayant une forme, selon les revendications 1 à 3, caractérisé en ce que l'on dissout un aminoorganosilane tertiaire de formule générale :

$R^6$
/
N - $R^7$ (V)
\
$R^8$

conjointement avec un silane organofonctionnel :

$X - R^9$ (VI)

correspondant à la composition stoechiométrique désirée du copolycondensat à produire, dans lesquelles $R^6$ à $R^9$ sont semblables ou différents et signifient un groupe de formule générale :

$R^5 - Si (OR^{10})_3$ (VII)

$R^5$ a la même signification que dans la formule (III),
$R^{10}$ signifie un radical alcoyle linéaire ou ramifié ayant de 1 à 5 atomes de carbone,
et X a la même signification que dans la formule (II), le cas échéant après addition d'un ou plusieurs agents de réticulation de formules générales :

$M(OR)_{2-4} R'_{0-2}$ ou $M(OR)_{2-3} R'_{0-1}$ (VIII)

dans lesquelles M est un atome de silicium, de titane, de zirconium ou d'aluminium,
R' est un radical alcoyle linéaire ou ramifié ayant de 1 à 5 atomes de carbone ou un radical phényle,
et R signifie un radical alcoyle linéaire ou ramifié ayant de 1 à 5 atomes de carbone et le rapport des atomes de silicium provenant des groupes de formule générale (VII) aux atomes de métal dans les éléments de pontage s'élève à 1 : 0 à 1,20 ;
dans un solvant largement miscible à l'eau, mais qui dissout l'aminoorganosilane de formule (V), et le silane organo fonctionnel de formule (VI) ainsi que l'agent de réticulation de formule (VIII) et qu'on ajoute à la solution sous agitation une quantité d'eau au moins suffisante pour l'hydrolyse complète et la condensation, puis on fait gélifier le mélange réactionnel tout en poursuivant l'agitation à une température déterminée dans la plage allant de la température ambiante à 200°C, avec la restriction que l'on ajoute lors du démarrage de la gélification ou jusqu'à une heure après cela, 10 à 2 000 - de préférence 50 à 500 - % en poids rapporté à la quantité totale d'aminoorganosilane (V), de silane organo fonctionnel (VI) et le cas échéant d'agent de réticulation (VIII, d'un solvant largement insoluble dans l'eau mais qui dissout le mélange réactionnel gélifié et que l'on homogénéise, que l'on ajoute de l'eau à l'homogénéisat immédiatement ou dans l'espace de temps allant jusqu'à 3 heures, le cas échéant en élevant la température ajustée à l'origine, 10 à 2 000 % en poids - de préférence 5 à 500 % en poids - rapporté à la quantité totale d'aminoorganosilane (V), de silane organo fonctionnel (VI) et le cas échéant d'agent de réticulation (VIII), qui

alors disperse la phase organique contenant le siloxane dans le système à deux phases liquides et on sépare le solide se formant sous forme de sphères, après une durée de réaction suffisante pour cela à une température allant de la température ambiante jusqu'à 200°C, de la phase liquide et ensuite le cas échéant on extrait, on sèche à une température allant de la température ambiante à 250°C, le cas échéant sous gaz protecteur ou sous vide et on recuit pendant 1 à 100 heures à des températures allant de 150 à 300°C et/ou on classifie.

**5.** Procédé selon la revendication 4, caractérisé en ce que l'on utilise comme solvant pour l'hydrolyse, du méthanol, de l'éthanol du n- ou i-propanol, du n- ou i-butanol ou du n-pentanol, seuls ou en mélange.

**6.** Procédé selon les revendications 4 ou 5, caractérisé en ce que l'on effectue l'hydrolyse avec un excès d'eau.

**7.** Procédé selon l'une ou plusieurs des revendications 4 à 6, caractérisé en ce qu'au mélange réactionnel gélifié, on ajoute un alcool linéaire ou ramifié ayant de 4 à 12 atomes de carbone, du toluène ou de l'o-, m-, p-xylène, isolement ou en mélange.

**8.** Procédé selon l'une ou plusieurs des revendications 4 à 7, caractérisé en ce qu'une partie ou aussi la quantité totale de solvant largement insoluble dans l'eau qui doit être ajoutée lors ou après le début de la gélification, est déjà mise en oeuvre dans l'étape d'hydrolyse à côté du solvant utilisé là.

**9.** Procédé selon l'une ou plusieurs des revendications 4 à 8, caractérisé en ce que l'on effectue la gélification et le formage à pression ordinaire ou en surpression, laquelle correspond à la somme des pressions partielles des composants du mélange réactionnel à la température utilisée respectivement.

**10.** Procédé selon l'une ou plusieurs des revendications 4 à 9, caractérisé en ce que l'on gélifie séparément l'aminoorganosilane de formule (V) isolement ou conjointement avec l'agent de réticulation (VIII) et/ou avec le silane organo fonctionnel (VI), que l'on homogénéise avec le solvant largement insoluble dans l'eau et que l'on ajoute alors en premier lieu à l'homogéneisat les composants qui manquent encore pour le copolycondensat.

**11.** Procédé selon l'une ou plusieurs des revendications 4 à 9, caractérisé en ce que l'on effectue la précondensation pour l'obtention de copolycondensats statistiques formés l'aminoorganosilane selon la formule (V), le silane organofonctionnel (VI) et le ou les agents de réticulation selon la formule (VIII) pendant un espace de temps allant de 5 mn à 48 heures, sans ou avec utilisation d'un solvant qui dissout les composants du monomère, de préférence en utilisant un alcool qui correspond aux groupes alcoxy ayant de 1 à 5 atomes de carbone, en présence d'une quantité d'eau qui n'est pas suffisante pour l'hydrolyse complète, de préférence de 1 à 100 % molaire de la quantité nécessaire pour cela, à une température allant de la température ambiante à 200°C.

**12.** Procédé selon la revendication 11, caractérisé en ce que l'on effectue la précondensation en présence d'un catalyseur de condensation acide, basique ou contenant un métal, de préférence en présence d'ammoniac.

**13.** Procédé d'obtention de copolycondensats en blocs, ayant une forme, selon les revendications 1 à 3, caractérisé en ce que l'on précondense d'abord un aminoorganosilane tertiaire de formule générale (V) et un silane organofonctionnel de formule (VI) dans laquelle $R^6$ à $R^9$ ainsi que X ont la portée de signification comme à la revendication 4 et le cas échéant un ou plusieurs agents de réticulation de formule générale (VIII), respectivement, indépendamment l'un de l'autre, sans ou avec utilisation d'un solvant, en présence d'une quantité d'eau qui n'est pas suffisante pour l'hydrolyse complète, de préférence en présence de 1 à 100 % molaire de la quantité nécessaire pour cela, pendant un espace de temps allant de 5 mn à 48 heures à une température allant de la température ambiante à 200°C et ensuite que l'on réunit et puis, après addition de davantage d'eau et le cas échéant de davantage de solvant de façon qu'au moins la quantité d'eau requise pour une hydrolyse complète et un polycondensation, stoechiométriquement, soit présente, on effectue l'hydrolyse complète et la polycondensation.

**14.** Procédé selon la revendication 13, caractérisé en ce que l'on effectue la précondensation en présence d'un catalyseur de condensation, acide, basique ou contenant un métal, de préférence en présence d'ammoniac.

**15.** Procédé d'obtention de copolycondensats mixtes ayant une forme, selon les revendications 1 à 3, caractérisé en ce que l'on précondense parmi les composants monomères prévus selon les formules (V), (VI) et (VIII) au moins un indépendamment l'un de l'autre pendant 5 mm à 48 heures, sans ou avec utilisation d'un solvant, en présence d'une quantité d'eau qui ne suffit pas pour une hydrolyse complète, de préférence en présence de 1 à 100 % molaire de la quantité ici nécessaire, à une température s'échelonnant de la température ambiante à 200°C et ensuite on réunit avec le ou les monomères non précondensés et finalement après ajout supplémentaire d'eau et le cas échéant d'une quantité supplémentaire de solvant, on effectue l'hydrolyse complète et la polycondensation selon la revendication 4.

**16.** Procédé de post-traitement des copolycondensats d'organosiloxanes ayant une forme, obtenus selon l'une ou plusieurs des revendications 4 à 15, mais non séchés, caractérisé en ce que le solide façonné en sphères est soumis en présence au moins du composant eau dans la phase liquide à un traitement thermique pendant une durée allant d'une heure à une semaine, à une température allant de 50°C à 300°C, de préférence de 100 à 200°C, pour lequel en cas de besoin une surpression est utilisée.

**17.** Procédé selon la revendication 16, caractérisé en ce que le traitement final est effectué en présence d'un catalyseur acide, basique ou contenant un métal, de préférence en présence d'ammoniac.

**18.** Utilisation des copolycondensats d'organosiloxanamines ayant une forme selon l'invention, conformément aux revendications 1 à 3, dans lesquels X représente
$-NH_2$, $-N(CH_3)_2$, $-N(C_2H_5)_2$, $-NH-(CH_2)_2-NH_2$,
$-NH-(CH_2)_2-NH-(CH_2)_2-NH_2$, $-SH$, $-P(C_6H_5)_2$, $-CN$,

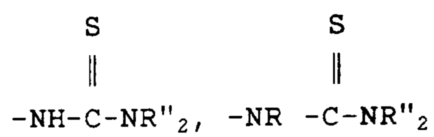

dans laquelle R' et R" ont la même signification que dans la revendication 1,
en vue de l'élimination de métaux dissouts des solutions aqueuses ou organiques selon le principe statistique ou dynamique.

**19.** Utilisation des copolycondensats d'organosiloxanamines ayant une forme, conformes à l'invention, selon les revendications 1 à 3 en vue de l'adsorption de composés organiques gazeux et/ou de vapeur d'eau, de préférence en vue de l'adsorption de solvants organiques.